# FASCICULE DE BREVET EUROPEEN

(11) **EP 3 820 601 B1**
(45) Date de publication et mention de la délivrance du brevet: **07.08.2024**
(21) Numéro de dépôt: 19732682.0
(22) Date de dépôt: 27.06.2019
(51) Int. Cl.: B01J 4/00, B01J 8/00, B01J 8/02

(54) **DISPOSITIF DE DISTRIBUTION D'UN FLUIDE, APTE A ETRE DISPOSE DANS UN REACTEUR COMPRENANT UN LIT CATALYTIQUE FIXE**
VORRICHTUNG ZUR ABGABE EINES FLUIDS, WOBEI DIE VORRICHTUNG IN EINEM REAKTOR MIT FESTEM KATALYSATORBETT ANGEORDNET SEIN KANN
DEVICE FOR DISPENSING A FLUID, WHICH DEVICE CAN BE ARRANGED IN A REACTOR COMPRISING A FIXED CATALYTIC BED

(30) Priorité: 10.07.2018 FR 1856334
(43) Date de publication de la demande: 19.05.2021
(73) Titulaire: AXENS, 92508 Rueil-Malmaison Cedex (FR)
(72) Inventeur: BOUTROT, Catherine, 92508 RUEIL MALMAISON cedex (FR); LE COZ, Jean-François, 92508 RUEIL MALMAISON cedex (FR)
(74) Mandataire: IFP Energies nouvelles
(86) Numéro de dépôt international: PCT/EP2019/067109
(87) Numéro de publication internationale: WO 2020/011542

(56) Documents cités:
- WO-A1-2006/032839
- WO-A1-2016/046834
- CN-A- 105 435 718
- FR-A- 1 213 627
- US-A- 2 461 331
- US-A1- 2004 068 085

## Description

### Domaine de l'invention

La présente invention concerne le domaine des dispositifs de distribution d'un fluide, apte à être disposé dans un réacteur comprenant un lit catalytique fixe, en particulier dans les réacteurs dont le lit catalytique est sujet à encrassement.

On rencontre de tels réacteurs dans le domaine du raffinage, en particulier dans les procédés d'hydrotraitements, typiquement d'hydrotraitement de naphta, dans les procédés de purification par adsorption ou dans certains procédés dans lesquels soit la charge contient des composés encrassants soit des composés encrassants se forment in-situ.

Dans certains procédés, en effet, des dépôts s'accumulent sur le lit catalytique fixe et causent au fur et à mesure du temps une réduction du volume interstitiel. On a pu constater que, bien souvent, ce phénomène d'encrassement ne concerne qu'une couche du lit d'épaisseur limitée, localisée à l'endroit où le fluide entre en contact avec le lit catalytique. Quand on prend l'exemple d'un réacteur vertical avec un écoulement descendant, il s'agit de la couche supérieure du lit. La couche qui s'encrasse prend notamment l'aspect d'une croûte épaisse composée d'une agglomération des éléments composant le lit catalytique recouverts et soudés entre eux par des gommes et des dépôts carbonés. Passée cette couche, d'une épaisseur comprise typiquement entre 3 et 20 fois la dimension des éléments composant le lit catalytique, l'encrassement paraît plus réduit. Une fois la couche supérieure encrassée, il apparait donc intéressant de pouvoir distribuer la charge dans la couche sous-jacente plus faiblement encrassée.

Dans la couche du lit qui s'encrasse, la perte de charge augmente progressivement, de façon plus ou moins rapide. Dans des cas extrêmes, on observe un bouchage du lit catalytique. La perte de charge peut être telle que l'exploitant est obligé d'arrêter prématurément le réacteur et de procéder à un écrémage du lit catalytique (« skimming » dans la terminologie anglo-saxonne). Cette opération de maintenance consiste à remplacer la couche supérieure du lit qui est colmatée par une couche fraîche. L'arrêt de l'unité entraîne une perte de production considérable. Dans certaines unités, des écrémages réguliers sont nécessaires, alors même que la partie inférieure du lit catalytique est toujours performante. Cette perte de production peut donc être récurrente.

Les composés encrassants sont typiquement amenés par la charge (impuretés, résidus de corrosion, particules de coke provenant du four par exemple) ou bien formés in-situ dans les conditions de pression et température du réacteur. Ces composés encrassants peuvent être des particules solides, des gommes, des polymères ou des espèces chimiques collantes.

### Art antérieur

Pour prévenir le colmatage prématuré du lit catalytique, différentes solutions techniques ont été développées via une pluralité de dispositifs installés dans le lit catalytique fixe.

Lorsque les impuretés se sont accumulées significativement, le fluide qui arrive sur le lit catalytique est réparti entre la pluralité de dispositifs. Chaque partie du fluide est ensuite distribuée dans la couche du lit catalytique située au niveau de la partie inférieure du dispositif. Ainsi le fluide court-circuite le lit catalytique sur la hauteur des dispositifs. L'augmentation de perte de charge au cours du temps est ainsi limitée. L'unité peut donc opérer plus longtemps avant d'arriver en butée de pression.

Un exemple de ce type de dispositif est décrit, notamment dans le brevet US 3,992,282, qui décrit une pluralité de cylindres verticaux indépendants qui sont répartis dans le lit fixe. La partie supérieure des dispositifs est munie d'un orifice de restriction et se trouve au-dessus de la couche supérieure du lit fixe. La partie inférieure est munie de grilles et plonge dans le lit principal de catalyseur.

Le brevet US 6,846,469 décrit une autre solution technique, analogue à la précédente, avec également une pluralité de dispositifs installée dans le réacteur. Chaque dispositif permet à une partie de la charge de court-circuiter successivement les différentes couches du lit catalytique au fur et à mesure de leur encrassement.

FR 1 213 627 A et WO 2006/032839 A1 dilvuguent des dispositifs de distribution d'un fluide.

Ces dispositifs se sont révélés longs à installer et à désinstaller. D'une part, il faut un grand nombre de ces dispositifs pour couvrir la section d'un réacteur. D'autre part, le montage consiste à
- positionner chacun des dispositifs,
- les maintenir pendant le remplissage du lit catalytique à l'aide de supports temporaires,
- installer les supports utilisés en opération.

L'opération de démontage est également longue puisqu'il faut faire l'inverse.

Enfin, des supports pour maintenir les dispositifs et les fixer au réacteur sont nécessaires en opération. Lors du démontage, ces supports sont susceptibles de se trouver dans la couche colmatée et peuvent être difficiles à extraire.

### Résumé de l'invention

Un but de l'invention est de proposer une nouvelle conception de dispositif de distribution présentant un montage plus aisé.

A cette fin, il est proposé un dispositif de distribution d'un fluide, apte à être disposé dans un lit catalytique fixe d'un réacteur, ledit dispositif comprenant
- des moyens d'acheminement amont dudit fluide comprenant une pluralité de conduits recevant chacun directement une partie distincte dudit fluide, sans connexion en amont à un moyen de répartition commun,
- des moyens de distribution aval dudit fluide,
- des moyens pour générer une perte de charge locale sur ledit fluide tel que :
   - le dispositif comprend des moyens de collecte dudit fluide, assurant la connexion fluidique entre les moyens d'acheminement et les moyens de distribution dudit fluide,
   - lesdits moyens pour générer une perte de charge locale sont rapportés sur lesdits moyens d'acheminement ou de distribution ou de collecte.

On comprend au sens de l'invention les conduits « recevant chacun directement une partie distincte dudit fluide » le fait qu'ils ne sont pas connectés, en amont, à un moyen de répartition commun, de type conduit commun auquel viendraient se brancher les conduits en question : chacun des conduits reçoit une portion du flux de fluide directement depuis la source de ce flux de fluide depuis la ou les entrées prévues à cet effet dans le réacteur. On comprend, toujours dans cette expression , par « partie distincte » le fait que chaque conduit reçoit une partie du même flux de fluide alimentant le réacteur, avec la même composition donc. Des portions de ce fluide sont donc convoyées en parallèle par ces conduits. Chacun des conduits reçoit sans élément intermédiaire le fluide à distribuer. Du fait de la pluralité de conduits, la totalité du fluide à distribuer se divise entre les différents conduits en des parties distinctes, de même composition. Ces parties distinctes ne sont donc pas mélangées dans les moyens d'acheminement.

Les moyens pour générer une perte de charge locale sont rapportés sur les moyens de distribution « au voisinage » de la zone de raccordement avec lesdits moyens de collecte, c'est-à-dire à proximité dans l'espace de la zone de raccordement ou dans ladite zone.

Le dispositif selon l'invention forme un dispositif complet d'un seul tenant, apte à être monté facilement dans un réacteur et à remplir la fonction de distribution à lui seul.

Dans le dispositif selon l'invention, les risques de mauvaise distribution du fluide sont, en outre, minimisés de par la conception du dispositif. En effet, les parties du fluide acheminées par les différents conduits qui sont raccordés aux mêmes moyens de collecte sont regroupées et homogénéisées avant d'être distribuées par les moyens de distribution.

Un autre avantage du dispositif selon l'invention est qu'il permet de réduire la durée de l'opération d'écrémage et la perte de production associée. Son montage et son démontage dans un réacteur sont très rapides. Il n'a pas besoin d'être maintenu pendant le remplissage ou la vidange du lit catalytique.

Il ne nécessite pas non plus obligatoirement de fixation mécanique au réacteur pendant que l'unité opère, alors que ces fixations sont installées, selon l'art antérieur, avant le redémarrage du réacteur.

De plus, le dispositif selon l'invention s'avère, également, particulièrement résistant à l'encrassement.

D'une part, le dispositif est plus performant en cas d'encrassement des moyens d'acheminement. Le fluide se répartit directement entre les différents conduits d'acheminement et ne rentre pas dans le dispositif par un point d'entrée unique. Même si certains des conduits étaient bouchés, les moyens de collecte distribuent le fluide vers tous les autres moyens de distribution.

D'autre part, le risque de mauvaise distribution lié à l'encrassement des moyens de distribution est réduit, car le dispositif comporte un grand nombre de moyens de distribution en comparaison avec les dispositif selon l'art antérieur.

Enfin, les moyens pour générer la perte de charge sont rapportés aux moyens de collecte, d'acheminement ou de distribution, mais sont distincts desdits moyens de collecte, d'acheminement ou de distribution. Ainsi, le risque de bouchage des moyens pour générer la perte de charge est limité, et son impact aussi si cela se produit. De plus, le bouchage éventuel des moyens d'acheminement ou l'encrassement éventuel des moyens de distribution n'ont pas d'impact sur lesdits moyens pour générer la perte de charge.

### Description :

### Définitions :

Dans tout le présent texte, on entend les termes « amont » et « aval » ou indifféremment « entrée » et « sortie » en référence au sens général d'écoulement du fluide considéré.

Dans tout le présent texte, on entend par « essentiellement gazeux », un fluide constitué essentiellement de gaz, et pouvant comprendre une faible quantité de liquide, typiquement jusqu'à 5% en volume de liquide.

Dans tout le présent texte, on entend par « essentiellement liquide », un fluide constitué essentiellement de liquide, et pouvant comprendre une faible quantité de gaz, typiquement jusqu'à 5% en volume de gaz.

De manière préférée, le fluide distribué par le dispositif selon l'invention est essentiellement liquide ou essentiellement gazeux.

Selon un mode de réalisation, nommé « mode simple » dans la suite du texte, le dispositif selon l'invention comprend d'uniques moyens d'acheminement, d'uniques moyens de collecte et d'uniques moyens de distribution.

Selon un mode de réalisation alternatif, appelé « mode étagé » dans la suite du texte, le dispositif selon l'invention comprend une pluralité de moyens de distribution, une pluralité de moyens de collecte, et des moyens de transfert ; tel que :
- lesdits moyens de collecte sont agencés les uns en dessous des autres
- lesdits moyens de transfert assurent la connexion fluidique entre la pluralité des moyens de collecte. Le dispositif dans ledit mode de réalisation permet avantageusement de distribuer le fluide à différents niveaux.

Les différentes variantes suivantes s'appliquent aux deux modes de réalisation, simple et étagé.

Dans une première variante A, les moyens de collecte dudit fluide du dispositif selon l'invention comprennent au moins un tube ou un réseau de tubes, sur lequel les conduits des moyens d'acheminement sont raccordés, ledit ou lesdits tubes étant fermés à leurs extrémités.

Dans ledit mode de réalisation, tout type de géométrie est possible de manière à s'adapter de façon flexible à toutes les tailles de réacteur.

Selon la variante A, ledit réseau de tubes du dispositif est, préférentiellement agencé en forme de croix, de réseau, de grille ou d'étoile. Ainsi le dispositif permet une distribution homogène sur une grande surface.

Quand le réseau de tubes du dispositif est agencé en forme de croix, de réseau, de grille ou en étoile, la longueur des diverses branches est préférentiellement judicieusement choisie pour distribuer uniformément le fluide. Les branches sont préférentiellement réparties dans un plan. Elles peuvent également être inclinées. Elles peuvent aussi être de forme ondulées pour contourner des obstacles, comme des capteurs ou conduites auxiliaires propres au réacteur et à son fonctionnement et indépendantes de l'invention. Les différentes géométries possibles permettent de disposer d'une solution technique flexible qu'on peut adapter aux contraintes à l'endroit où sera agencé le dispositif.

Dans une deuxième variante B, les moyens de collecte dudit fluide du dispositif selon l'invention comprennent au moins un anneau, préférentiellement de forme torique ou ovale ou polygonale, sur lequel les conduits des moyens d'acheminement sont raccordés. Dans ledit mode de réalisation, les moyens de collecte sont moins enclins à se boucher.

De préférence, chacun des moyens de collecte du fluide est raccordé à au moins trois conduits des moyens d'acheminement qui reçoivent chacun directement une partie distincte du fluide.

De préférence, sur chacun des moyens de collecte, les moyens de distribution sont plus nombreux que les conduits d'acheminement. Avantageusement, au moins quatre moyens de distribution sont raccordés à chacun des moyens de collecte.

Préférentiellement, les moyens d'acheminement dudit fluide et/ou les moyens de transfert du dispositif selon l'invention s'étendent suivant l'axe z et chacun des moyens de collecte dudit fluide s'étendent dans un plan P, tel que l'axe z et le plan P forment un angle α compris entre 60 et 120 degrés, préférentiellement un angle de 90 degrés.

Préférentiellement, les moyens pour générer une perte de charge locale du dispositif selon l'invention comprennent une restriction de la section de passage du fluide de type orifice de restriction, rétrécissement local ou soufflet.

Préférentiellement, les moyens pour générer une perte de charge locale du dispositif selon l'invention comprennent un organe déprimogène autorisant une fuite minimale et ne pouvant subir de blocage dû à un colmatage.

Préférentiellement, les moyens de distribution dudit dispositif selon l'invention comprennent une pluralité de buses, raccordées auxdits moyens de collecte, lesdites buses s'étendant préférentiellement, dans le plan P desdits moyens de collecte.

Préférentiellement, les moyens pour générer une perte de charge locale du dispositif selon l'invention sont rapportés sur les moyens de collecte, au voisinage de la zone de raccordement avec lesdits moyens de collecte.

Quand les moyens de collecte comprennent des buses, les moyens pour générer une perte de charge locale du dispositif selon l'invention sont, de préférence, rapportés sur lesdites buses, au voisinage de la zone de raccordement avec lesdits moyens de collecte.

Préférentiellement, l'angle de raccordement β du corps desdites buses par rapport aux moyens de collecte est compris entre 60 et 120 degrés, préférentiellement 90 degrés. La section de raccordement est alors réduite, ce qui maximise la résistance mécanique et minimise la longueur du cordon de soudure dans le cas où les buses sont soudées aux moyens de collecte.

Selon un mode particulièrement préféré de réalisation, les moyens de collecte comprennent un anneau sur lequel les conduits des moyens d'acheminement et une pluralité de buses sont raccordés. Les moyens pour générer les pertes de charge locale sont rapportés préférentiellement à la zone de raccordement entre les buses et l'anneau. Dans ce mode de réalisation, le dispositif est efficace et présente une bonne tenue mécanique.

L'invention concerne aussi un réacteur comprenant :
- Un lit catalytique fixe
- Un dispositif de distribution selon l'invention, agencé dans ledit lit, de manière à ce que,

- les entrées des conduits des moyens d'acheminement dudit dispositif sont en amont ou au niveau dudit lit
- et les moyens de collecte, de distribution et éventuellement de transfert dudit dispositif sont dans ledit lit.

On comprend par « les entrées » des conduits, soit l'entrée constituée par l'ouverture à l'extrémité amont des conduits en question soit au moins une entrée ou une partie des entrées de chacun des conduits, notamment quand, comme illustré plus loin, il y a plusieurs entrées pour chaque conduit, par exemple quand l'extrémité amont est en tout ou partie bouchée et que des ouvertures sont pratiquées sur une certaine hauteur de la paroi du conduit en question pour constituer les entrées de fluide.

On comprend par « en amont ou au niveau dudit lit » le fait que la ou au moins une des entrées des conduits des moyens d'acheminement affleurent à la surface amont du lit ou sont au moins pour partie en amont dudit lit (donc au -dessus du lit quand il s'agit d'un réacteur disposé verticalement avec la ou les entrées de fluide en partie haute du réacteur et la ou les sorties en partie basse du réacteur) : La ou les entrées des conduits d'acheminement sont situées, soit totalement au-dessus de la surface supérieure du lit catalytique, soit affleurent du lit au moins pour partie, soit sont partiellement au-dessus/affleurants et partiellement dans le lit catalytique. Dans tous les cas, avantageusement, au moins une entrée est située à la surface du lit catalytique ou au-dessus (toujours dans la configuration d'un réacteur orienté verticalement avec alimentation en partie haute et soutirage en partie basse du réacteur). Les conduits d'acheminement sont donc en tout ou partie dans le lit catalytique, et débouchent avantageusement partiellement hors du lit catalytique afin que son/ses entrées de fluide soient au moins pour partie hors du lit ou affleurent à celui-ci.

Les phases de maintenance (installation du dispositif, remplissage ou vidange du lit catalytique fixe) du réacteur selon l'invention sont plus rapides qu'avec les solutions techniques de l'art antérieur. En effet, le dispositif de distribution ne nécessite pas de maintien/supports temporaires pendant le remplissage ou la vidange du lit catalytique.

Le dispositif dans le « mode étagé » peut également être agencé dans le lit catalytique du réacteur selon l'invention. Le dispositif permet alors de court-circuiter successivement plusieurs couches catalytiques superposées, au fur et à mesure de l'encrassement. Le réacteur peut donc opérer plus longtemps avant qu'il soit nécessaire de l'arrêter pour écrémage.

Préférentiellement, dans le réacteur selon l'invention, lesdits moyens de collecte dudit dispositif s'étendent dans un plan orthogonal à l'axe dudit réacteur.

Préférentiellement, dans le réacteur selon l'invention, c'est ledit lit catalytique fixe selon l'invention qui supporte ledit dispositif. Ainsi le montage et le démontage du dispositif de distribution dans le réacteur sont très rapides.

Par exemple, dans le cas d'un réacteur vertical à écoulement descendant, on charge les éléments du lit catalytique jusqu'au niveau auquel doivent se situer les moyens de collecte. On pose le dispositif sur le lit catalytique en faisant reposer les moyens de collecte sur le lit. Puis, on charge le reste du lit catalytique.

Alternativement, dans le cas d'un réacteur vertical à écoulement ascendant, on suspend l'ensemble du dispositif au niveau des moyens de collecte. Puis, on remplit le lit catalytique.

Optionnellement, on peut quand même munir les moyens de collecte du dispositif de moyens de fixation mécanique au réacteur selon l'invention. Ces moyens de fixations seront suffisants pour maintenir le dispositif entier pendant les phases d'opération. Il n'est donc pas nécessaire de fixer les moyens d'acheminement et /ou de distribution.

Dans un autre mode de réalisation, le réacteur comprend plusieurs dispositifs selon l'invention, en nombre limité ; de préférence, deux à cinq dispositifs de distribution, par exemple trois ou quatre. Les dispositifs peuvent être installés côte à côte, les uns dans les autres ou les uns en dessous des autres. Dans ce mode de réalisation, la distance entre deux moyens de distribution adjacents est généralement supérieure ou égale à 2 fois et inférieure ou égale à 20 fois le diamètre de la section des moyens de collecte, préférentiellement supérieure ou égale à 5 fois et inférieure ou égale à 10 fois le diamètre de la section des moyens de collecte.

De préférence, le lit catalytique fixe du réacteur selon l'invention comprend des solides granulaires disposés en couches successives. De préférence, le lit peut comprendre une ou plusieurs couches comprenant généralement chacune soit des éléments de captation, appelés «gardes », soit du garnissage inerte ou actif, soit du catalyseur, soit de l'adsorbant. Les solides granulaires se présentent typiquement sous la forme d'extrudés (cylindriques, multilobés, etc) et/ou de billes et/ou d'éléments poreux mis en forme, par exemple des médaillons céramiques réticulés, mais bien d'autres formes existent. Pour simplifier, dans la suite du texte, on utilise le terme « élément catalytique » pour désigner les différents solides granulaires du lit.

De préférence, dans le réacteur selon l'invention, le lit catalytique contient des éléments catalytiques et les dimensions des sorties de chacun desdits moyens de distribution sont strictement inférieures à la plus petite dimension desdits éléments au niveau desquels le fluide est distribué. Les dimensions des sorties desdits moyens de distribution sont typiquement le diamètre, la hauteur, ou la largeur de la section de passage de la sortie des buses. Les dimensions des éléments catalytiques sont typiquement le diamètre, la hauteur ou la largeur de ceux-ci.

L'invention concerne aussi un procédé mettant en oeuvre le dispositif de distribution selon l'invention et/ou le réacteur selon l'invention, dans lequel on hydrotraite une charge comprenant du naphta, préférentiellement du naphta riche en oléfines, ou dans lequel on hydrogène sélectivement une charge d'essence craquée, ou dans lequel on purifie par adsorption un gaz de ses impuretés ou tout autre procédé opérant un réacteur avec un lit catalytique fixe sujet à l'encrassement.

Dans le procédé selon l'invention, le fluide distribué par le dispositif est la charge du réacteur mis en oeuvre.

Préférentiellement, dans le « mode étagé », le dispositif selon l'invention comprend des moyens d'acheminement, entre deux et trois moyens de collecte agencés les uns en dessous des autres et entre un et deux de moyens de transfert.

Plus préférentiellement, dans le mode de réalisation étagé, le dispositif selon l'invention comprend des moyens d'acheminement, deux moyens de collecte agencés l'un en dessous de l'autre et des uniques moyens de transfert.

Préférentiellement, les conduits d'acheminement du dispositif selon l'invention sont munis d'au moins une entrée et d'une sortie de fluide. Chacune des entrées des conduits peut être avantageusement munie de moyens de prévention d'entrée de matière solide de type chapeau, lucarne, chicane, grille ou équivalent. Les dimensions des sections de passage du fluide en entrées des conduits d'acheminement sont alors préférentiellement strictement inférieures à celles de la section de passage des moyens pour générer une perte de charge locale. Cela permet d'éviter de boucher les moyens pour générer une perte de charge locale dans le cas où des particules passeraient quand même.

Selon une autre variante, les moyens d'acheminement sont tels que :
- l'extrémité des conduits qui est opposée à l'extrémité raccordée aux moyens de collecte est fermée
- des ouvertures d'entrée de fluide sont ménagées sur la partie latérale desdits conduits. Les dimensions des ouvertures d'entrée de fluide sont alors préférentiellement strictement inférieures aux dimensions de la section de passage des moyens pour générer une perte de charge locale. Cela permet d'éviter de boucher les moyens pour générer une perte de charge locale dans le cas où des particules passeraient quand même.

Préférentiellement, la hauteur des conduits desdits moyens d'acheminement du dispositif est comprise entre 150 et 1 000 mm.

Dans le « mode simple », la hauteur du dispositif est, de préférence, comprise entre 3 et 20 fois la plus grande dimension des éléments composant le lit catalytique. Dans le « mode étagé », la hauteur de chaque étage du dispositif est, de préférence, comprise entre 3 et 20 fois la plus grande dimension des éléments composant le lit catalytique .

De préférence, la section de passage des moyens de collecte et/ou des moyens d'acheminement et/ ou des moyens de transfert est ronde, ovale ou parallélépipédique.

Les moyens de collecte peuvent comprendre au moins une partie droite et une partie courbe.

Le dispositif de distribution selon l'invention peut être utilisé dans tous les réacteurs comprenant au moins un lit catalytique fixe, agencé verticalement. Préférentiellement, l'écoulement du fluide est descendant.

De préférence, le dispositif est fait d'un matériau compatible avec les conditions opératoires et la composition du fluide du réacteur dans lequel il est apte à être agencé. Typiquement, le dispositif est en métal, de préférence, en acier, en acier inoxydable, ou en acier revêtu d'une couche protectrice contre la corrosion.

Préférentiellement, dans le réacteur selon l'invention, le dispositif de distribution comprend des moyens pour générer une perte de charge locale tels que la perte de charge générée est comprise entre un dixième et une fois, préférentiellement entre un quart et trois quart, plus préférentiellement entre un tiers et deux tiers, de la perte de charge du lit catalytique fixe situé entre les moyens d'acheminement et les moyens de distribution.

Préférentiellement, quand le lit catalytique fixe du réacteur selon l'invention n'est pas encrassé, le dispositif permet le passage d'une quantité limitée du fluide. Typiquement, une quantité de fluide inférieure ou égale à 40% en volume du fluide, préférentiellement inférieure ou égale à 30% en volume, préférentiellement inférieure ou égale à 20% en volume du fluide, passe dans le dispositif tant que la perte de charge dans le lit catalytique est inférieure à celle du dispositif.

Préférentiellement, lorsque suffisamment d'impuretés se sont accumulées, le dispositif de distribution permet au fluide de court-circuiter la couche catalytique encrassée et d'être redistribué dans une couche sous-jacente moins encrassée. Typiquement, une quantité de fluide supérieure ou égale à 50% en volume, préférentiellement supérieure ou égale à 70% en volume, plus préférentiellement supérieure ou égale à 80% en volume, du fluide passe dans le dispositif.

Dans un mode de réalisation préféré, les moyens de collecte peuvent comprendre plusieurs anneaux, préférentiellement deux à cinq, plus préférentiellement deux à quatre, encore plus préférentiellement deux à trois, disposés concentriquement dans le même plan P. La distance entre deux anneaux adjacents est, de préférence, supérieure ou égale à 3 fois et inférieure ou égale à 20 fois la plus grande dimension des éléments du lit catalytique, plus préférentiellement supérieure ou égale à 6 fois et inférieure ou égale à 16 fois la plus grande dimension des éléments du lit catalytique. Ce mode de réalisation permet d'équiper les réacteurs de grand diamètre.

L'homme du métier adapte la configuration du dispositif (diamètre, longueur et nombre des moyens d'acheminement, collecte et distribution) pour la perte de charge générée localement soit bien supérieure aux pertes de charge générées par friction dans le dispositif.

L'homme du métier choisit le nombre de moyens de distribution pour que la distribution du fluide soit sensiblement uniforme quel que soit le débit de fluide distribué.

Préférentiellement, la distance entre deux conduits des moyens d'acheminement raccordés sur les moyens de collecte est supérieure ou égale à 100 mm et inférieure ou égale à 1 000 mm, préférentiellement supérieure ou égale à 400 mm et inférieure ou égale à 800 mm.

Préférentiellement, chacun des moyens de distribution comprend une entrée raccordée aux moyens de collecte et une sortie qui débouche dans le lit catalytique. Ladite sortie débouche librement, c'est-à-dire ne comporte pas de grille ou de plaque perforée à son extrémité. Préférentiellement, les dimensions de la section de passage de chacun des moyens de distribution sont inférieures aux dimensions des éléments du lit catalytique dans lesquels le fluide est distribué. Plus précisément, les dimensions sont préférentiellement plus petites d'un écart au moins égal à 5 % de la plus grande dimension des éléments du lit catalytique. Par exemple, le diamètre de la sortie d'une buse de forme cylindrique est strictement inférieur aux dimensions des éléments de garnissage dans lequel le fluide est distribué.

Dans un mode de réalisation préféré, les moyens de distribution comprennent des buses. Ces buses sont préférentiellement cylindriques, mais toute autre forme est envisageable. Ces buses comprennent préférentiellement un orifice de restriction localisé à l'entrée de la buse.

La longueur des moyens de distribution est ajustée afin de distribuer uniformément le fluide, notamment sur toute la section du lit catalytique fixe du réacteur. Les moyens de distribution n'ont pas nécessairement une longueur homogène. Cela peut être le cas notamment pour contourner un obstacle disposé au sein du réacteur ou pour alimenter une zone de faible surface ne justifiant pas une conduite de distribution propre.

Préférentiellement, chacun des moyens de distribution présente des moyens pour générer une perte de charge locale.

Préférentiellement, les moyens pour générer une perte de charge locale génèrent une différence de pression supérieure ou égale à 0,03 MPa et inférieure ou égale à 0,3 MPa, préférentiellement supérieure ou égale à 0,05 MPa et inférieure ou égale à 0,12 MPa lorsque la totalité du fluide est distribué par le dispositif.

Le dispositif peut avoir une structure modulaire comprenant plusieurs « tronçons », en nombre limité, destinés à être assemblés dans le réacteur. Chacun des « tronçons » est apte à être introduit dans le réacteur par le trou d'homme.

Les moyens de collecte sont typiquement fabriqués à partir de plusieurs morceaux, par exemple, en forme d'arc si les moyens de collecte comprennent un anneau de forme torique. Ces tronçons sont liés mécaniquement par tout dispositif connu de l'homme du métier, par exemple par brides munies de boulons.

A noter que le dispositif de l'invention peut avantageusement avoir une conception modulaire, pour permettre une flexibilité par rapport aux besoins : ainsi, plus particulièrement les moyens de collecte, mais aussi les moyens d'acheminement , peuvent être conçus sous forme d'éléments modulaires standards, que l'on vient assembler selon différentes tailles/formes selon les réacteurs à équiper. On peut prévoir une, deux ou trois tailles de modules, et avec ceux-ci constituer des dispositifs très variés.

Les conduits d'acheminement peuvent être raccordés aux moyens de collecte par tout dispositif connu de l'Homme du métier : par soudure, ou par brides munies de boulons.

Les moyens de distribution peuvent être soudés, vissés ou fixés aux moyens de collecte par tout moyen connu de l'homme du métier pour lier mécaniquement deux éléments.

Une fois le dispositif monté, les moyens de collecte du dispositif selon l'invention constituent une base qui permet de poser facilement le dispositif sur une surface plane. Dans certaines configurations, c'est l'ensemble constitué par les moyens de distribution raccordés sur les moyens de collecte du dispositif qui constitue la base permettant de poser le dispositif sur une surface plane.

De la même manière, quand le dispositif est agencé dans le lit catalytique fixe d'un réacteur selon l'invention, la base du dispositif occupe avantageusement une grande partie de la section transversale du réacteur. Le dispositif a donc une assise importante. Cela permet au dispositif d'être stable vis à vis des à-coups ou vibrations mécaniques survenant pendant l'opération.

Dans un mode de réalisation, on peut utiliser plusieurs dispositifs de distribution selon l'invention dans le réacteur. Par exemple, plusieurs dispositifs de distribution indépendants, afin de court-circuiter une première couche supérieure encrassée, puis éventuellement d'autres couches inférieures lorsqu'elles sont encrassées à leur tour, à l'aide de dispositifs successifs. Typiquement, deux ou trois dispositifs successifs peuvent être installés.

L'invention se rapporte aussi au procédé mettant en oeuvre un réacteur selon l'invention pour hydrotraiter une charge de naphta. Par hydrotraitement, on désigne l'ensemble des procédés d'épuration qui permettent d'éliminer, par action de l'hydrogène, les impuretés diverses contenues dans les coupes hydrocarbonées.

L'hydrotraitement de naphta est généralement utilisé en raffinerie pour purifier du naphta pour en faire une charge typiquement utilisable dans les unités de reformage catalytique ou d'isomérisation ou un produit valorisable dans un pool essence par exemple. Le procédé d'hydrotraitement peut assurer l'hydrodésulfuration, l'hydrodéazotation et éventuellement l'hydrogénation des oléfines de la charge. Le naphta est typiquement issu d'unité de distillation atmosphérique de bruts, ou issu d'unité de craquage thermique comme la cokéfaction, la pyrolyse ou le craquage sous vapeur, ou issu d'unité d'hydroconversion. Ces différents types de naphta peuvent être traités seul ou en mélange. Les naphtas issus des unités de craquage sont appelés naphtas craqués et sont riches en oléfines.

Le procédé selon l'invention est particulièrement adapté pour mettre oeuvre un réacteur d'hydrotraitement de naphta riche en oléfines, notamment du naphta craqué.

L'invention se rapporte aussi au procédé mettant en oeuvre un réacteur selon l'invention pour hydrogéner sélectivement les oléfines d'une charge d'essence craquée.

### Description détaillée :

Les autres caractéristiques et avantages de l'invention vont apparaître à la lecture des exemples non limitatifs et en référence aux figures ci-dessous :
- La figure 1a représente une vue transversale et la figure 1b une vue de dessus d'un exemple du dispositif de distribution, selon une première variante de l'invention en « mode simple ».
- La figure 2 représente la vue en coupe d'un détail du même dispositif de distribution que la figure 1.
- Les figures 3a, 3b et 3c représentent chacune, en coupe, un type de buse utilisable comme moyens de distribution dans le dispositif selon l'invention.
- Les figures 4 et 5 représentent des vues de dessus de deux autres exemples du dispositif de distribution selon deux autres variantes de l'invention.
- La figure 6 représente le dispositif de distribution D de la figure 1 agencé dans un réacteur R selon une première variante de l'invention, en « mode simple ».
- La figure 7 représente le dispositif de distribution D agencé dans un réacteur R selon une deuxième variante de l'invention, en « mode étagé ».

Les figures sont très schématiques et représentent les différents composés dans leur positionnement en mode de fonctionnement.

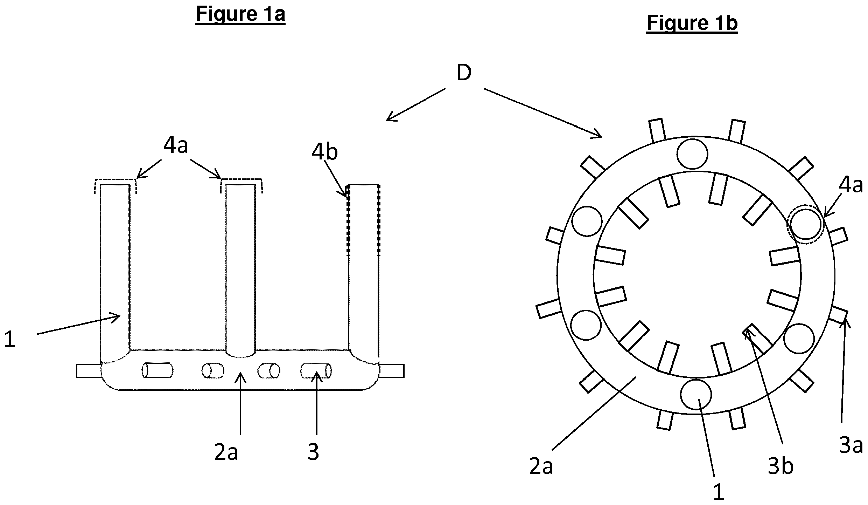

La figure 1a représente une vue de dessus d'un exemple du dispositif de distribution D selon une première variante de l'invention, en « mode simple ». Le dispositif D est fabriqué en acier inoxydable. Les conduits 1 des moyens d'acheminement sont constitués par des tubes cylindriques verticaux. Les moyens de collecte sont constitué d'un anneau 2a, de section cylindrique, et de forme torique sur lequel sont raccordés les conduits 1. Les moyens de distribution sont constitués par des buses 3, réparties uniformément sur l'anneau 2a. Les conduits 1, l'anneau 2a et les buses 3 sont raccordés mécaniquement les uns aux autres pour assurer le transport du fluide à distribuer depuis les conduits 1 vers l'anneau 2a puis de l'anneau 2a vers les buses 3.

Dans la variante représentée, les buses 3 s'étendent dans le plan horizontal, dans lequel s'étend l'anneau 2a.

Optionnellement, des moyens de prévention d'entrée de particules solides dans les conduits 1 sont constitués de chapeaux 4a agencés au-dessus de l'entrée de chaque conduit. Alternativement, les entrées des conduits 1 peuvent être obturées par une plaque circulaire pleine et des ouvertures peuvent être aménagées sur l'enveloppe extérieure des conduits 4b : soit des ouvertures rondes, des ouvertures rectangulaires ou des fentes, soit des zones avec une grille Johnson^{™} à large pas par exemple.

La figure 1b représente une vue de dessus du dispositif de distribution D selon la même variante de l'invention que la figure 1a. Les buses sont réparties de part et d'autres de l'anneau 2a : la sortie d'une série de buses 3a est orientée vers l'extérieur de l'anneau 2a et la sortie d'une série de buses 3b est orientée vers l'intérieur de l'anneau 2a.

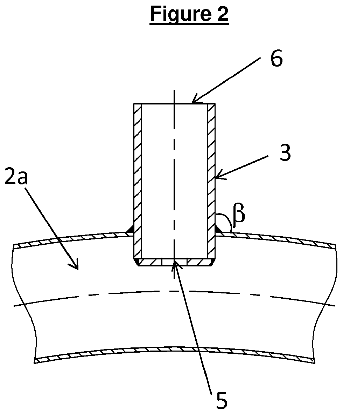

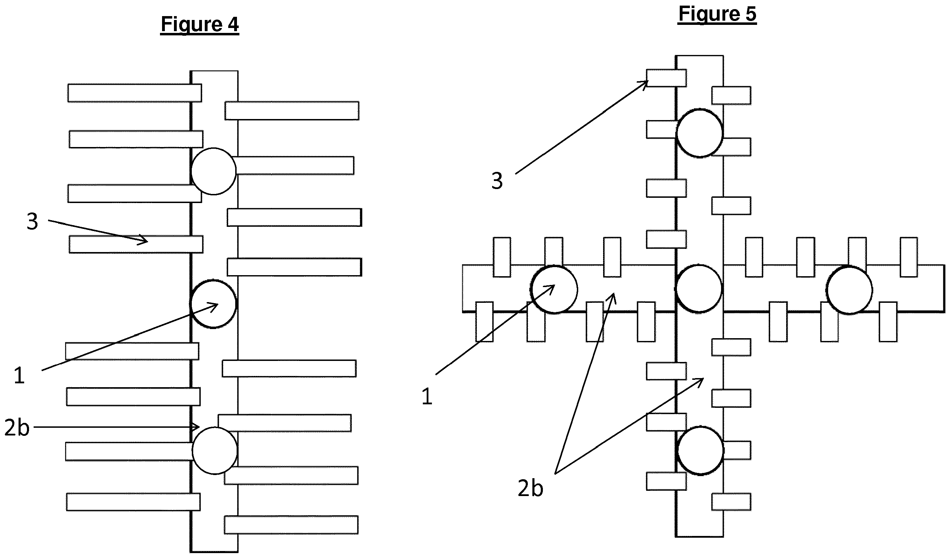

La figure 2 représente la vue en coupe de la zone de raccordement entre les moyens de distribution et les moyens de collecte dans la même variante que les figures 1a et 1b. Une buse 3, constituée d'un cylindre creux, est soudée sur l'anneau 2a. Un orifice de restriction 5 est soudé à l'entrée de la buse 3. Une fois dans le réacteur (confère figure 5), la sortie 6 de la buse débouche librement dans le lit catalytique et son diamètre nominal est inférieur ou égale à la plus petite dimension des éléments du lit fixe à ce niveau.

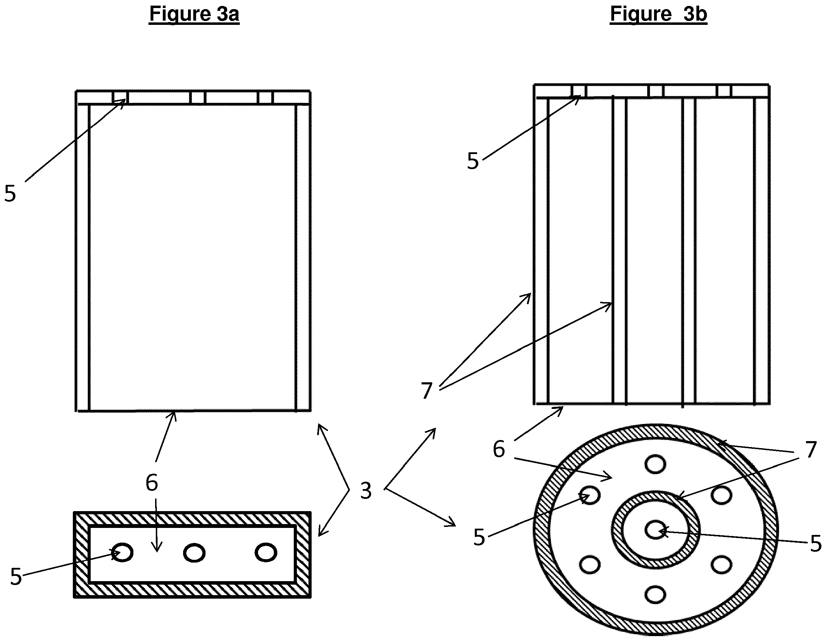

La figure 3a représente une première variante de buse utilisable comme moyens de distribution dans le dispositif selon l'invention, en vue de dessus et en coupe transversale. La section de passage de la buse 3 est rectangulaire. Trois orifices de restriction 5 sont agencés à l'entrée de la buse.

La figure 3b représente une deuxième variante de buse utilisable comme moyens de distribution dans le dispositif selon l'invention, en vue de dessus et en coupe transversale. La buse 3 est formée par deux cylindriques concentriques 7. Au centre du cylindre central, un orifice de restriction 5 est implémenté. Six orifices de restriction 5 sont répartis dans la zone annulaire située entre les deux cylindres.

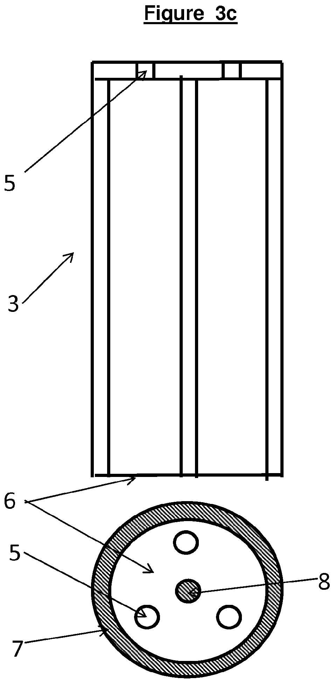

La figure 3c représente une troisième variante de buse utilisable comme moyens de distribution dans le dispositif selon l'invention en vue de dessus et en coupe transversale. La buse 3 est formée d'un cylindre 7 au centre duquel est positionnée une tige 8. Trois orifices de restriction 5 sont inscrits sur un cercle médian.

La figure 4 représente une vue de dessus d'un deuxième exemple du dispositif de distribution D selon une deuxième variante de l'invention. Le dispositif selon l'invention comprend des moyens de collecte constitués d'une conduite cylindrique droite 2b et des conduits d'acheminement cylindriques 1. Des buses 3 sont réparties sur les deux côtés de la conduite cylindrique droite 2b. Dans cette configuration, la longueur des buses contribue à la stabilité du dispositif D.

La figure 5 représente une vue de dessus d'un autre exemple du dispositif de distribution D selon une autre variante de l'invention. Le dispositif selon l'invention comprend des moyens de collecte constitués deux conduites cylindriques droites 2b, assemblées en forme de croix et de cinq conduits d'acheminement 1 cylindriques. Des buses 3 sont réparties sur les deux conduites cylindriques droites.

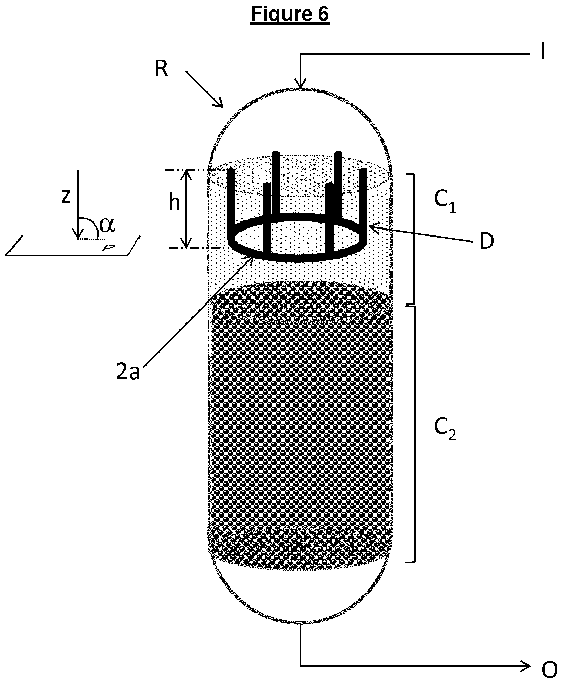

La figure 6 représente le dispositif de distribution D, de l'exemple des figures 1a et 1b, agencé dans un réacteur R, selon un axe vertical z, dans une première variante de l'invention, en « mode simple ». Le réacteur R est opéré en phase gaz descendante avec un lit fixe, sujet à l'encrassement, dans lequel le dispositif D selon l'invention est implanté. Le fluide à distribuer (la charge) entre par la conduite I sous forme gazeuse et sort par la conduite O. La couche supérieure C₁ du lit catalytique dans cet exemple est constituée d'éléments de garnissage. Le lit catalytique fixe comprend une seconde couche C₂. Le dispositif de distribution D comprend des moyens d'acheminement, constitués par des conduits 1, qui s'étendent suivant l'axe z et des moyens de collecte, constitués par un anneau 2a, qui s'étendent dans le plan P. L'axe z se confond avec l'axe du réacteur R et le plan P est parallèle à la section transversale du réacteur.

L'anneau 2a est pourvu de buses non représentées, judicieusement réparties sur sa circonférence.

L'anneau 2a repose horizontalement sur des éléments de la couche C₁. Ainsi, le dispositif de distribution D est posé sur le catalyseur, préférentiellement à un niveau horizontal situé entre 20 et 80% de la hauteur de ladite couche, et plus préférentiellement entre 40 et 60%. Les entrées des conduits d'acheminement 1 se situent au-dessus du niveau de la couche C₁.

Quand le lit catalytique s'encrasse, le dispositif D permet de court-circuiter la couche de lit catalytique d'une hauteur h correspondant à la hauteur du dispositif.

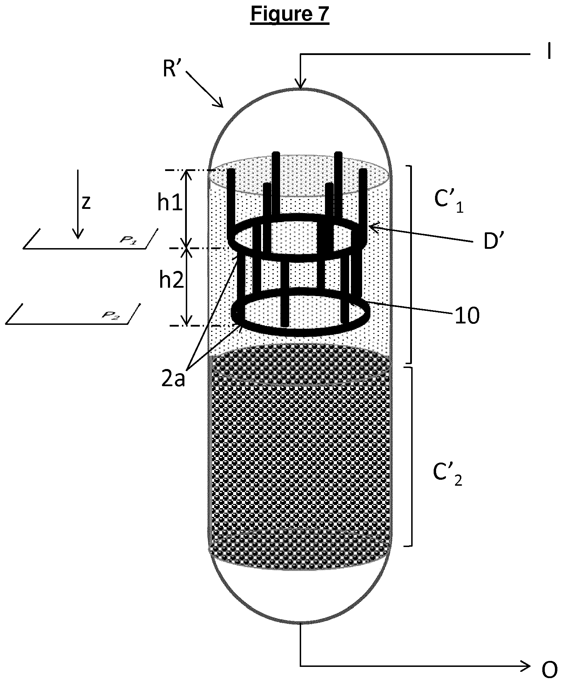

La figure 7 représente le dispositif de distribution D' agencé dans un réacteur R' selon une deuxième variante de l'invention en « mode étagé ». Le réacteur R' est très similaire au réacteur R de la figure 6. Le dispositif de distribution D' est en partie identique au dispositif de distribution D. La différence est qu'il comprend deux moyens de collecte, constitués par deux anneaux 2a superposés. L'anneau supérieur s'étend dans un plan P₁, orthogonal à l'axe z, et l'anneau inférieur s'étend dans un plan P₂, qui est parallèle à P₁. Les deux anneaux 2a sont raccordés par des moyens de transfert, constitués par des conduites cylindriques 10 s'étendant suivant l'axe z. Les deux anneaux 2a sont pourvus de buses non représentées.

Le second anneau 2a repose horizontalement sur des éléments constituant la couche C₁'. Ainsi, le dispositif de distribution D' est posé sur le catalyseur tel que :
- le premier anneau est situé préférentiellement à un niveau horizontal situé entre 20 et 50% de la hauteur de ladite couche, et plus préférentiellement entre 25 et 40%.
- le deuxième anneau est situé préférentiellement à un niveau horizontal situé entre 50 et 80% de la hauteur de ladite couche, et plus préférentiellement entre 60 et 75%.

Les entrées des conduits d'acheminement 1 se situent au-dessus du niveau de la couche C₁'.

Quand le lit catalytique s'encrasse, le dispositif D' permet de court-circuiter la couche de lit catalytique C₁' d'une hauteur h₁ puis d'une hauteur h₂.

### EXEMPLE 1 :

Un réacteur R de diamètre 1,4 m est pourvu d'un dispositif D selon l'invention en mode simple, comme dans la figure 5, dans une variante du dispositif analogue à celle représentée figures 1a et 1b. Une charge de naphta craqué sous forme gazeuse de 500 m3 /h est traitée. Le dispositif est installé dans une couche de lit catalytique constituée par des éléments de garnissage ayant un diamètre de 51 mm.

Un anneau 2a d'un diamètre de tore 1 m est installé dans le réacteur. L'anneau d'une section de 50 mm de diamètre nominal reçoit le fluide de 6 conduits d'acheminement constitués par des cylindres creux de diamètre nominal de 50 mm.

24 buses d'un diamètre interne de 48 mm et d'une longueur de 125 mm sont réparties sur l'anneau. Chaque buse est munie à son entrée d'un orifice de restriction d'un diamètre de 19 mm.

Le temps de montage du dispositif dans le réacteur est estimé à 20 minutes alors que les dispositifs selon l'art antérieur avec plusieurs dispositifs adjacents nécessitent plusieurs heures.

### EXEMPLE 2 :

Un réacteur de diamètre 3,8 m est pourvu de trois dispositifs en mode simple selon l'invention, disposés concentriquement, pour traiter une charge naphta sous forme gazeuse de 4400 m3 /h. Les dispositifs sont installés dans une couche de lit catalytique constituée par des éléments de garnissage ayant un diamètre de 51 mm.

Les moyens de collecte de chacun des trois dispositifs sont constitués par un anneau de forme torique et de section cylindrique. Les trois anneaux sont disposés concentriquement, dans le même plan, et leur diamètre de tore respectif est de 1 m, 2 m et 3 m. Les anneaux ont un diamètre nominal de 75 mm et reçoivent respectivement le fluide de 4, 8 et 12 conduits d'acheminement. Ceux-ci ont un diamètre nominal de 75 mm.

128 buses d'un diamètre interne de 48 mm et d'une longueur de 125 mm sont réparties sur les 3 tores, respectivement 22 buses, 42 buses et 64 buses. Chaque buse est munie à son entrée d'un orifice de restriction d'un diamètre de 19 mm.

Le temps de montage du dispositif dans le réacteur est estimé à 50 minutes, alors que les dispositifs selon l'art antérieur avec plusieurs dispositifs adjacents nécessitent une journée.

## Revendications

1. Dispositif de distribution (D) d'un fluide, apte à être disposé dans un lit catalytique fixe (C₁, C₂ ; C'₁, C'₂) d'un réacteur (R ), ledit dispositif comprenant
• des moyens d'acheminement amont dudit fluide comprenant une pluralité de conduits (1) recevant chacun directement une partie distincte dudit fluide, sans connexion en amont à un moyen de répartition commun,
• des moyens de distribution aval dudit fluide (3),
• des moyens pour générer une perte de charge locale sur ledit fluide (5)
**caractérisé en ce que** :
- le dispositif comprend des moyens de collecte dudit fluide (2a ; 2b), assurant la connexion fluidique entre les conduits des moyens d'acheminement (1) et les moyens de distribution dudit fluide (3),
- lesdits moyens pour générer une perte de charge locale (5) sont rapportés sur lesdits moyens d'acheminement (1) ou de distribution (3) ou de collecte (2a ; 2b).

2. Dispositif selon la revendication précédente, **caractérisé en ce qu'**il comprend une pluralité de moyens de distribution (3), une pluralité de moyens de collecte (2a ; 2b), et des moyens de transfert (10);
et **en ce que**:
- lesdits moyens de collecte (2a ; 2b) sont agencés les uns en dessous des autres
- lesdits moyens de transfert (10) assurent la connexion fluidique entre la pluralité des moyens de collecte (2a ;2b).

3. Dispositif selon l'une des revendications précédentes, dans lequel les moyens de collecte dudit fluide comprennent au moins un tube ou un réseau de tubes (2b), sur lequel les conduits des moyens d'acheminement (1) sont raccordés, ledit ou lesdits tubes (2b) étant fermés à leurs extrémités.

4. Dispositif selon la revendication précédente, dans lequel ledit réseau de tubes (2b) est agencé en forme de croix, de réseau, de grille ou d'étoile.

5. Dispositif selon l'une des revendications 1 à 2, dans lequel les moyens de collecte dudit fluide comprennent au moins un anneau (2a ), préférentiellement de forme torique ou ovale ou polygonale, sur lequel les conduits (1) des moyens d'acheminement sont raccordés.

6. Dispositif selon l'une des revendications précédentes, dans lequel les moyens d'acheminements dudit fluide (1) et/ou les moyens de transfert (10) s'étendent suivant un axe z et chacun des moyens de collecte dudit fluide (2a ; 2b) s'étendent dans un plan (P), tel que l'axe (z) et le plan (P) forment un angle (α) compris entre 60 et 120 degrés, préférentiellement un angle de 90 degrés.

7. Dispositif selon l'une des revendications précédentes, dans lequel lesdits moyens pour générer une perte de charge locale comprennent une restriction de la section de passage du fluide de type orifice de restriction (5), rétrécissement local ou soufflet.

8. Dispositif selon l'une des revendications précédentes, dans lequel les moyens de distribution dudit fluide comprennent une pluralité de buses (3), raccordées auxdits moyens de collecte (2a ; 2b), lesdites buses s'étendant préférentiellement, dans le plan P desdits moyens de collecte

9. Dispositif selon la revendication précédente, dans lequel l'angle de raccordement (β) du corps desdites buses par rapport aux moyens de collecte est compris entre 60 et 120 degrés, préférentiellement 90 degrés.

10. Dispositif selon l'une des revendications précédentes, dans lequel les moyens pour générer une perte de charge locale (5) sont rapportés sur les moyens de distribution (3) dans la zone de raccordement avec les moyens de collecte (2a ; 2b).

11. Réacteur (R) comprenant:
• Un lit catalytique fixe (C₁, C₂; C'₁, C'₂ )
• Un dispositif de distribution (D) selon l'une quelconque des revendications précédentes, agencé dans ledit lit de manière à ce que l'entrée ou au moins une des entrées des conduits (1) des moyens d'acheminement dudit dispositif soient en amont ou affleurent dudit lit, et les moyens de collecte (2a ; 2b), de distribution (3) et, éventuellement de transfert (10), dudit dispositif soient dans ledit lit.

12. Réacteur (R) selon la revendication précédente, dans lequel lesdits moyens de collecte dudit dispositif s'étendent dans un plan (P) orthogonal à l'axe (z) dudit réacteur (R).

13. Réacteur selon l'une des revendications 11 ou 12, dans lequel ledit lit catalytique fixe supporte le dispositif.

14. Réacteur selon l'une des revendications 11 à 13, dans lequel le lit catalytique contient des éléments catalytiques et dans lequel les dimensions des sorties de chacun desdits moyens de distribution sont strictement inférieures à la plus petite dimension desdits éléments au niveau desquels le fluide est distribué.

15. Procédé dans lequel est mis en oeuvre le dispositif (D) et/ou le réacteur (R ) selon l'une des revendications précédentes, dans lequel on hydrotraite une charge comprenant du naphta, préférentiellement du naphta riche en oléfines, ou dans lequel on hydrogène sélectivement une charge d'essence craquée, ou dans lequel on purifie par adsorption un gaz de ses impuretés.

## Patentansprüche

1. Vorrichtung zur Verteilung (D) eines Fluids, welche geeignet ist, in einem festen Katalysatorbett (C₁, C₂ ; C'₁, C'₂) eines Reaktors (R) angeordnet zu werden, wobei die Vorrichtung umfasst:
• stromaufwärtige Fördermittel des Fluids, die mehrere Kanäle (1) umfassen, welche jeweils einen gesonderten Teil des Fluids direkt aufnehmen, ohne stromaufwärtige Verbindung mit einem gemeinsamen Aufteilungsmittel,
• stromabwärtige Verteilungsmittel des Fluids (3),
• Mittel zum Erzeugen eines lokalen Druckverlustes an dem Fluid (5),
**dadurch gekennzeichnet, dass**:
- die Vorrichtung Sammelmittel des Fluids (2a; 2b) umfasst, welche die Fluidverbindung zwischen den Kanälen der Fördermittel (1) und den Verteilungsmitteln des Fluids (3) sicherstellen,
- die Mittel zum Erzeugen eines lokalen Druckverlustes (5) an den Fördermitteln (1) oder den Verteilungsmitteln (3) oder den Sammelmitteln (2a; 2b) angebracht sind.

2. Vorrichtung nach dem vorhergehenden Anspruch, **dadurch gekennzeichnet, dass** sie mehrere Verteilungsmittel (3), mehrere Sammelmittel (2a; 2b) und Übertragungsmittel (10) umfasst;
und dadurch, dass:
- die Sammelmittel (2a; 2b) untereinander angeordnet sind,
- die Übertragungsmittel (10) die Fluidverbindung zwischen den mehreren Sammelmitteln (2a; 2b) sicherstellen.

3. Vorrichtung nach einem der vorhergehenden Ansprüche, wobei die Sammelmittel des Fluids mindestens ein Rohr oder ein Netz von Rohren (2b) umfassen, an das die Fördermittel (1) angeschlossen sind, wobei das oder die Rohre (2b) an ihren Enden geschlossen sind.

4. Vorrichtung nach dem vorhergehenden Anspruch, wobei das Netz von Rohren (2b) kreuz-, netz-, gitter- oder sternförmig angeordnet ist

5. Vorrichtung nach einem der Ansprüche 1 bis 2, wobei die Sammelmittel des Fluids mindestens einen Ring (2a) umfassen, vorzugsweise von torischer oder ovaler oder polygonaler Form, an den die Kanäle (1) der Fördermittel angeschlossen sind.

6. Vorrichtung nach einem der vorhergehenden Ansprüche, wobei die Fördermittel des Fluids (1) und/oder die Übertragungsmittel (10) sich entlang einer Achse z erstrecken und jedes der Sammelmittel des Fluids (2a; 2b) sich in einer Ebene (P) erstreckt, derart, dass die Achse (z) und die Ebene (P) einen Winkel (α) zwischen 60 und 120 Grad bilden, vorzugsweise einen Winkel von 90 Grad.

7. Vorrichtung nach einem der vorhergehenden Ansprüche, wobei die Mittel zum Erzeugen eines lokalen Druckverlustes eine Beschränkung des Durchflussquerschnitts des Fluids vom Typ einer Drosselblende (5), einer lokalen Verengung oder eines Balges umfassen.

8. Vorrichtung nach einem der vorhergehenden Ansprüche, wobei die Verteilungsmittel des Fluids mehrere Düsen (3) umfassen, die an die Sammelmittel (2a; 2b) geschlossen sind, wobei sich die Düsen vorzugsweise in der Ebene P der Sammelmittel erstrecken.

9. Vorrichtung nach dem vorhergehenden Anspruch, wobei der Anschlusswinkel (β) des Körpers der Düsen bezüglich der Sammelmittel zwischen 60 und 120 Grad beträgt, vorzugsweise 90 Grad.

10. Vorrichtung nach einem der vorhergehenden Ansprüche, wobei die Mittel zum Erzeugen eines lokalen Druckverlustes (5) an den Verteilungsmitteln (3) im Bereich des Anschlusses an die Sammelmittel (2a; 2b) angebracht sind.

11. Reaktor (R), welcher umfasst:
• ein festes Katalysatorbett (C₁, C₂ ; C'₁, C'₂)
• eine Vorrichtung zur Verteilung (D) nach einem der vorhergehenden Ansprüche, die so in dem Bett angeordnet ist, dass der Eingang oder wenigstens einer der Eingänge der Kanäle (1) der Fördermittel der Vorrichtung sich stromaufwärts des Bettes befindet oder an ihm anliegt und die Sammelmittel (2a; 2b), die Verteilungsmittel (3) und gegebenenfalls die Übertragungsmittel (10) der Vorrichtung sich in dem Bett befinden.

12. Reaktor (R) nach dem vorhergehenden Anspruch, wobei sich die Sammelmittel der Vorrichtung in einer Ebene (P) erstrecken, die zur Achse (z) des Reaktors (R) orthogonal ist.

13. Reaktor nach einem der Ansprüche 11 oder 12, wobei das feste Katalysatorbett die Vorrichtung trägt.

14. Reaktor nach einem der Ansprüche 11 bis 13, wobei das Katalysatorbett katalytische Elemente enthält und wobei die Abmessungen der Ausgänge jedes der Verteilungsmittel streng kleiner als die kleinste Abmessung der Elemente sind, an denen das Fluid verteilt wird.

15. Verfahren, bei welchem die Vorrichtung (D) und/oder der Reaktor (R) nach einem der vorhergehenden Ansprüche eingesetzt werden, bei welchem eine Charge hydrobehandelt wird, die Naphtha, vorzugsweise olefinreiches Naphtha, umfasst, oder bei welchem eine Charge gekracktes Benzin selektiv hydriert wird oder bei welchem ein Gas durch Adsorption von seinen Verunreinigungen gereinigt wird.

## Claims

1. Device (D) for distributing a fluid, which is able to be arranged in a fixed catalytic bed (C₁, C₂; C'₁, C'₂)of a reactor (R), said device comprising
• upstream conveying means for conveying said fluid, comprising a plurality of pipes (1) each directly receiving a distinct share of said fluid, with no upstream connection to a common distribution means,
• downstream means (3) for distributing said fluid,
• means (5) for generating a local pressure drop in said fluid, **characterized in that**:
- the device comprises manifold means (2a; 2b) for collecting said fluid together, and providing the fluidic connection between the pipes of said fluid conveying means (1) and said fluid distribution means (3),
- said means (5) for generating a local pressure drop are added on to said conveying (1) or distribution (3) or manifold (2a; 2b) means.

2. Device according to the preceding claim, **characterized in that** it comprises a plurality of distribution means (3), a plurality of manifold means (2a; 2b), and transfer means (10);
and **in that**:
- said manifold means (2a; 2b) are arranged one below the other,
- said transfer means (10) provide the fluidic connection between the plurality of the manifold means (2a; 2b).

3. Device according to either of the preceding claims, wherein the manifold means for collecting-together said fluid comprise at least one tube or an array of tubes (2b), to which the pipes of the conveying means (1) are connected, said tube or tubes (2b) being closed at their ends.

4. Device according to the preceding claim, wherein said array of tubes (2b) is arranged in the form of a cross, an array, a grid or a star.

5. Device according to either of Claims 1 and 2, wherein the manifold means for collecting-together said fluid comprise at least one ring (2a), preferably of toric or oval or polygonal shape, to which the pipes (1) of the conveying means are connected.

6. Device according to one of the preceding claims, wherein said fluid conveying means (1) and/or the transfer means (10) extend along an axis z and each of said manifold means (2a; 2b) for collecting-together said fluid extend in a plane (P), such that the axis (z) and the plane (P) form an angle (α) comprised between 60 and 120 degrees, preferentially an angle of 90 degrees.

7. Device according to one of the preceding claims, wherein said means for generating a local pressure drop comprise a restriction in the cross section for passage of the fluid of the restriction orifice (5), local narrowing or bellows type.

8. Device according to one of the preceding claims, wherein said fluid distribution means comprise a plurality of nozzles (3), connected to said manifold means (2a; 2b), said nozzles preferentially extending in the plane P of said manifold means.

9. Device according to the preceding claim, wherein the angle of connection (β) of the body of said nozzles with respect to the manifold means is comprised between 60 and 120 degrees, preferentially 90 degrees.

10. Device according to one of the preceding claims, wherein the means (5) for generating a local pressure drop are added on to the distribution means (3) in the region of connection to the manifold means (2a; 2b).

11. Reactor (R) comprising:
• a fixed catalytic bed (C₁, C₂; C'₁, C'₂)
• a distribution device (D) according to any one of the preceding claims, arranged in said bed in such a way that the inlet or at least one of the inlets of the pipes (1) of the conveying means of said device are upstream of or flush with said bed, and the manifold means (2a; 2b), distribution means (3) and potentially transfer means (10) of said device are in said bed.

12. Reactor (R) according to the preceding claim, wherein said manifold means of said device extend in a plane (P) orthogonal to the axis (z) of said reactor (R).

13. Reactor according to either of Claims 11 and 12, wherein said fixed catalytic bed supports the device.

14. Reactor according to one of Claims 11 to 13, wherein the catalytic bed contains catalytic elements and wherein the dimensions of the outlets of each of said distribution means are strictly smaller than the smallest dimension of said elements at the level of which the fluid is distributed.

15. Process in which the device (D) and/or the reactor (R) according to one of the preceding claims is/are implemented, wherein a feedstock comprising naphtha, preferentially olefin-rich naphtha, is hydrotreated, or wherein a cracked petroleum feedstock is selectively hydrogenated, or wherein a gas is cleaned of its impurities by adsorption.
